# EUROPEAN PATENT APPLICATION

(11) **EP 3 142 431 A1**
(43) Date of publication of application: **15.03.2017**
(21) Application number: 15788944.5
(22) Date of filing: 08.05.2015
(51) Int. Cl.: H04W 56/00, H04W 92/18

(54) **COMMUNICATION CONTROL METHOD, USER TERMINAL AND BASE STATION**

(30) Priority: 09.05.2014 US 201461991051 P
(71) Applicant: Kyocera Corporation, Kyoto-shi, Kyoto 612-8501 (JP)
(72) Inventor: MATSUMOTO, Naohisa, Kyoto-shi Kyoto 612-8501 (JP); FUJISHIRO, Masato, Kyoto-shi Kyoto 612-8501 (JP); ADACHI, Hiroyuki, Kyoto-shi Kyoto 612-8501 (JP)
(74) Representative: Schwabe - Sandmair - Marx
(86) International application number: PCT/JP2015/063373
(87) International publication number: WO 2015/170763

(57) **Abstract**

A communication control method according to the present embodiment comprises: a step of transmitting, by a user terminal located inside a cell, detection information indicating that a D2D synchronization signal is detected, to a base station that manages the cell, when receiving the D2D synchronization signal from another user terminal; and a step of transmitting, to the user terminal, by the base station, on the basis of the detection information received from the user terminal, setting information for setting the user terminal to a D2D synchronization source.

## Description

### TECHNICAL FIELD

Embodiments of the present disclosure relate to a communication control method, a user terminal, and a base station used in a mobile communication system.

### BACKGROUND ART

In 3GPP (3rd Generation Partnership Project) which is a project aiming to standardize a mobile communication system, the introduction of Device to Device (D2D) proximity service is discussed as a new function after Release 12 (see Non Patent Document 1).

The D2D proximity service (D2D ProSe) is a service enabling direct Device-to-Device communication within a synchronization cluster including a plurality of synchronized user terminals. The D2D proximity service includes a D2D discovery procedure (Discovery) in which a proximal terminal is discovered and D2D communication (Communication) that is direct Device-to-Device communication.

Further, when a user terminal is a D2D synchronization source, the user terminal transmits a D2D synchronization signal, and when a user terminal is a D2D asynchronization source, the user terminal performs synchronization on the basis of the received D2D synchronization signal.

### PRIOR ART DOCUMENTS

### NON PATENT DOCUMENT

Non Patent Document 1: 3GPP technical report "TR 36.843 V12.0.1" March 27, 2014

### SUMMARY

To synchronize a user terminal existing inside a cell (hereinafter, "intra-cell user terminal") and a user terminal existing outside a cell (hereinafter, "out-of-cell user terminal"), it is assumed that the user terminal existing inside a cell is set as a D2D synchronization source from which a D2D synchronization signal is transmitted.

Here, a base station does not know where an out-of-cell user terminal exists, and thus, it is unclear that it is appropriate which intra-cell user terminal is set as a synchronization source. Thus, the base station sets an intra-cell user terminal having no out-of-cell user terminal in the vicinity, as a D2D synchronization source, and the intra-cell user terminal may transmit a wasteful synchronization signal.

Therefore, an object of the present application is to enable an appropriate user terminal to be set as a D2D synchronization source.

A communication control method according to an embodiment comprises: a step of transmitting, by a user terminal located inside a cell, detection information indicating that a D2D synchronization signal is detected, to a base station that manages the cell, when receiving the D2D synchronization signal from another user terminal; and a step of transmitting, to the user terminal, by the base station, on the basis of the detection information received from the user terminal, setting information for setting the user terminal to a D2D synchronization source.

### BRIEF DESCRIPTION OF DRAWINGS

Fig. 1 is a configuration diagram of an LTE system according to an embodiment.
Fig. 2 is a block diagram of a UE according to the embodiment.
Fig. 3 is a block diagram of an eNB according to the embodiment.
Fig. 4 is a protocol stack diagram according to the embodiment.
Fig. 5 is a configuration diagram of a radio frame according to the embodiment.
Fig. 6 is a diagram for describing a D2D synchronization signal according to the present embodiment.
Fig. 7 is diagrams for describing an arrangement of a radio resource used for transmitting a D2D synchronization signal according to the present embodiment.
Fig. 8 is diagrams for describing an arrangement of a radio resource used for transmitting a D2D synchronization signal according to the present embodiment.
Fig. 9 is an explanatory diagram for describing an operation according to the embodiment.
Fig. 10 is an explanatory diagram for describing D2D synchronization procedure for partial coverage.

### DESCRIPTION OF THE EMBODIMENT

### [Overview of Embodiment]

A communication control method according to an embodiment comprises: a step of transmitting, by a user terminal located inside a cell, detection information indicating that a D2D synchronization signal is detected, to a base station that manages the cell, when receiving the D2D synchronization signal from another user terminal; and a step of transmitting, to the user terminal, by the base station, on the basis of the detection information received from the user terminal, setting information for setting the user terminal to a D2D synchronization source.

The communication control method according to the embodiment further comprises: a step of starting, by the user terminal, transmitting a D2D synchronization signal, on the basis of the setting information received from the base station; and a step of stopping, by the other user terminal, transmitting the D2D synchronization signal, when receiving the D2D synchronization signal from the user terminal.

The communication control method according to the embodiment further comprises: a step of transmitting, by the user terminal, a D2D synchronization signal including information indicating a D2D resource used in a D2D proximity service.

In the embodiment, in the step of transmitting the detection information, the user terminal transmits, to the base station, the detection information when a reception level of the D2D synchronization signal from the other user terminal is equal to or more than a predetermined value.

A user terminal according to an embodiment comprises: a transmitter configured to transmit detection information indicating that a D2D synchronization signal is detected, to a base station that manages a cell, when receiving the D2D synchronization signal from another user terminal.

A base station according to an embodiment comprises: a receiver configured to receive, from a user terminal, detection information indicating that a D2D synchronization signal is detected; and a transmitter configured to transmit, to the user terminal, on the basis of the detection information received from the user terminal, setting information for setting the user terminal to a D2D synchronization source.

### [Embodiment]

Hereinafter, the embodiment in a case where the present application is applied to an LTE system will be described.

### (System Configuration)

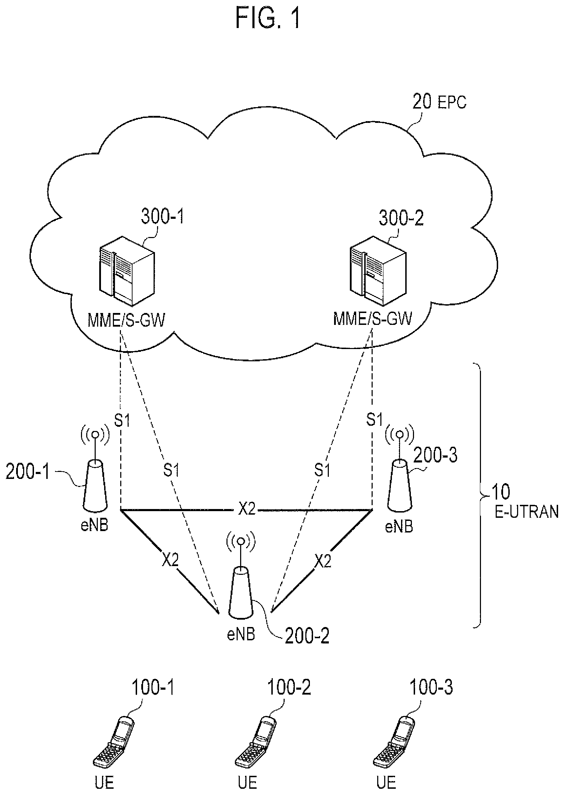

Fig. 1 is a configuration diagram of an LTE system according to an embodiment. As shown in Fig. 1, the LTE system according to the embodiment includes UEs (User Equipments) 100, E-UTRAN (Evolved-UMTS Terrestrial Radio Access Network) 10, and EPC (Evolved Packet Core) 20.

The UE 100 corresponds to a user terminal. The UE 100 is a mobile communication device and performs radio communication with a connected cell (a serving cell). Configuration of the UE 100 will be described later.

The E-UTRAN 10 corresponds to a radio access network. The E-UTRAN 10 includes eNBs 200 (evolved Node-Bs). The eNB 200 corresponds to a base station. The eNBs 200 are connected mutually via an X2 interface. Configuration of the eNB 200 will be described later.

The eNB 200 manages a cell or a plurality of cells and performs radio communication with the UE 100 that establishes a connection with the cell of the eNB 200. The eNB 200, for example, has a radio resource management (RRM) function, a function of routing user data, and a measurement control function for mobility control and scheduling. It is noted that the "cell" is used as a term indicating a minimum unit of a radio communication area, and is also used as a term indicating a function of performing radio communication with the UE 100.

The EPC 20 corresponds to a core network. A network of the LTE system (a LTE network) is configured by the E-UTRAN 10 and the EPC 20. The EPC 20 includes MME (Mobility Management Entity)/S-GW (Serving-Gateway) 300. The MME performs various mobility controls and the like, for the UE 100. The S-GW performs control to transfer user data. The MME/S-GW 300 is connected to the eNB 200 via an S1 interface.

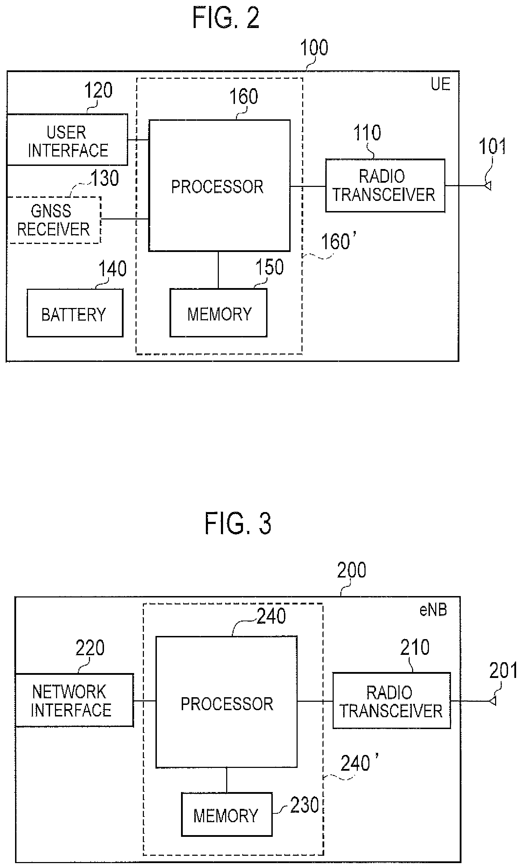

Fig. 2 is a block diagram of the UE 100. As shown in Fig. 2, the UE 100 includes an antenna 101, a radio transceiver 110, a user interface 120, GNSS (Global Navigation Satellite System) receiver 130, a battery 140, a memory 150, and a processor 160. The memory 150 corresponds to a storage unit, and the processor 160 corresponds to a control unit. The UE 100 may not have the GNSS receiver 130. Furthermore, the memory 150 may be integrally formed with the processor 160, and this set (that is, a chip set) may be a processor 160' constituting the control unit.

The antenna 101 and the radio transceiver 110 are used to transmit and receive a radio signal. The radio transceiver 110 converts a baseband signal (a transmission signal) output from the processor 160 into the radio signal, and transmits the radio signal from the antenna 101. Furthermore, the radio transceiver 110 converts a radio signal (a reception signal) received by the antenna 101 into the baseband signal, and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various processes and various communication protocols described later.

Fig. 3 is a block diagram of the eNB 200. As shown in Fig. 3, the eNB 200 includes an antenna 201, a radio transceiver 210, a network interface 220, a memory 230, and a processor 240. It is note that the memory 230 may be integrated with the processor 240, and this set (that is, a chipset) may be a processor 240' constituting the control unit.

The antenna 201 and the radio transceiver 210 are used to transmit and receive a radio signal. The radio transceiver 210 converts a baseband signal (a transmission signal) output from the processor 240 into the radio signal, and transmits the radio signal from the antenna 201. Furthermore, the radio transceiver 210 converts a radio signal (a reception signal) received by the antenna 201 into the baseband signal, and outputs the baseband signal to the processor 240.

The network interface 220 is connected to the neighbor eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 executes various processes and various communication protocols described later.

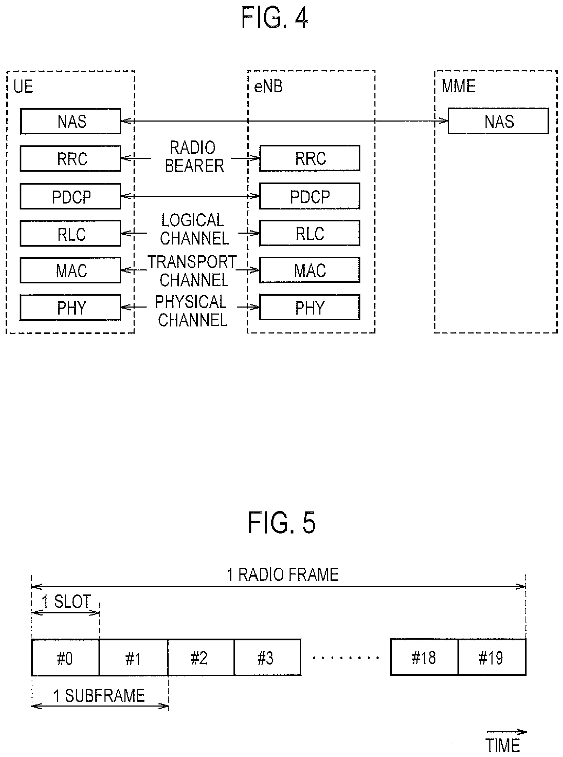

Fig. 4 is a protocol stack diagram of a radio interface in the LTE system. As shown in Fig. 4, the radio interface protocol is classified into a layer 1 to a layer 3 of an OSI reference model, wherein the layer 1 is a physical (PHY) layer. The layer 2 includes MAC (Medium Access Control) layer, RLC (Radio Link Control) layer, and PDCP (Packet Data Convergence Protocol) layer. The layer 3 includes RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, user data and a control signal are transmitted through the physical channel.

The MAC layer performs priority control of data, and a retransmission process and the like by hybrid ARQ (HARQ). Between the MAC layer of the UE 100 and the MAC layer of the eNB 200, user data and a control signal are transmitted via a transport channel. The MAC layer of the eNB 200 includes a transport format of an uplink and a downlink (a transport block size, a modulation and coding scheme) and a scheduler to decide (schedule) an allocated resource block to the UE 100.

The RLC layer transmits data to an RLC layer of a reception side by using the functions of the MAC layer and the PHY layer. Between the RLC layer of the UE 100 and the RLC layer of the eNB 200, user data and a control signal are transmitted via a logical channel.

The PDCP layer performs header compression and decompression, and encryption and decryption.

The RRC layer is defined only in a control plane handling a control signal. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When a connection (an RRC connection) is established between the RRC of the UE 100 and the RRC of the eNB 200, the UE 100 is in an RRC connected state, and when the connection is not established, the UE 100 is in an RRC idle state.

NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiple Access) is employed in a downlink (DL), and SC-FDMA (Single Carrier Frequency Division Multiple Access) is employed in an uplink (UL), respectively.

As shown in Fig. 5, the radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. A resource element is configured by one subcarrier and one symbol. Among radio resources allocated to the UE 100, a frequency resource is configured by a resource block and a time resource is configured by a subframe (or slot).

### (D2D proximity service)

A D2D proximity service will be described, below. The LTE system according to an embodiment supports the D2D proximity service. The D2D proximity service is described in Non Patent Document 1, and an outline thereof will be described here.

The D2D proximity service (D2D ProSe) is a service enabling direct UE-to-UE communication within a synchronization cluster including a plurality of synchronized UEs 100. The D2D proximity service includes a D2D discovery procedure (Discovery) in which a proximal UE is discovered and D2D communication (Communication) that is direct UE-to-UE communication. The D2D communication is also called Direct Communication.

A scenario in which all the UEs 100 forming the synchronization cluster are located inside a cell coverage is called "In coverage". A scenario in which all the UEs 100 forming the synchronization cluster are located outside a cell coverage is called "Out of coverage". A scenario in which some UEs 100 in the synchronization cluster are located inside a cell coverage and the remaining UEs 100 are located outside the cell coverage is called "Partial coverage".

In "In coverage", the eNB 200 is a D2D synchronization source, for example. A D2D asynchronization source, from which a D2D synchronization signal is not transmitted, is synchronized with the D2D synchronization source. The eNB 200 that is a D2D synchronization source transmits, by a broadcast signal, D2D resource information indicating a radio resource available for the D2D proximity service. The D2D resource information includes information indicating a radio resource available for the D2D discovery procedure (Discovery resource information) and information indicating a radio resource available for the D2D communication (Communication resource information), for example. The UE 100 that is a D2D asynchronization source performs the D2D discovery procedure and the D2D communication on the basis of the D2D resource information received from the eNB 200.

In "Out of coverage" or "Partial coverage", the UE 100 is a D2D synchronization source, for example. In "Out of coverage", the UE 100 that is a D2D synchronization source transmits D2D resource information indicating a radio resource available for the D2D proximity service, by a D2D synchronization signal, for example. The D2D synchronization signal is a signal transmitted in the D2D synchronization procedure in which a device-to-device synchronization is established. The D2D synchronization signal includes a D2DSS and a physical D2D synchronization channel (PD2DSCH). The D2DSS is a signal for providing a synchronization standard of a time and a frequency. The PD2DSCH is a physical channel through which more information can be conveyed than the D2DSS. The PD2DSCH conveys the above-described D2D resource information (the Discovery resource information and the Communication resource information). Alternatively, when the D2DSS is associated with the D2D resource information, the PD2DSCH may be rendered unnecessary.

In the D2D discovery procedure, a discovery signal for discovering a proximal terminal (hereinafter, "Discovery signal") is transmitted. Types of the D2D discovery procedure include: a first discovery type (Type 1 discovery) in which a radio resource not uniquely assigned to the UE 100 is used for transmitting a Discovery signal; and a second discovery type (Type 2 discovery) in which a radio resource uniquely allocated to each UE 100 is used for transmitting a Discovery signal. In the second discovery type, a radio resource individually allocated to each transmission of a Discovery signal or a radio resource allocated semi-persistently is used.

Further, Modes of the D2D communication included: a first mode (Mode 1) in which the eNB 200 or a relay node allocate a radio resource for transmitting D2D data (D2D data and/or control data); and a second mode (Mode 2) in which the UE 100 selects a radio resource for transmitting D2D data. The UE100 performs the D2D communication in any one of the modes. For example, a UE 100 in the RRC connected state performs the D2D communication in the first mode and a UE 100 in out of coverage performs the D2D communication in the second mode.

### (D2D synchronization signal)

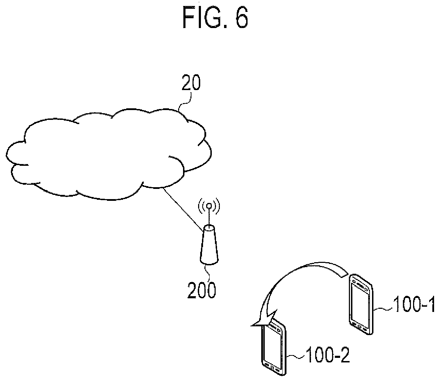

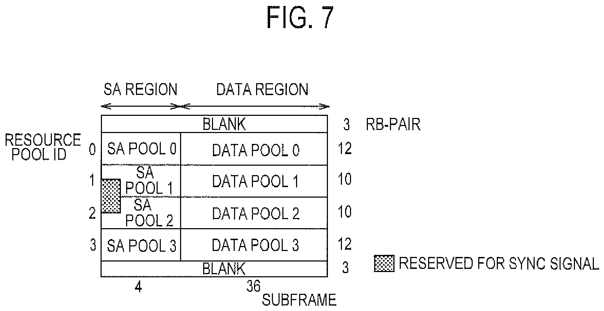

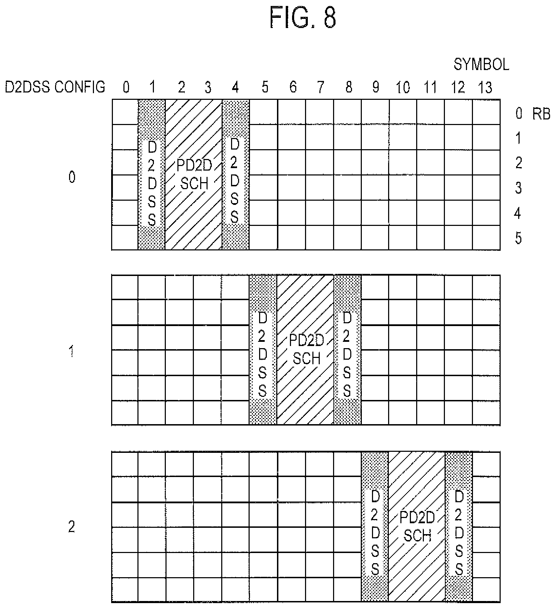

Next, a D2D synchronization signal will be described by using Fig. 6 to Fig. 8. Fig. 6 is a diagram for describing a D2D synchronization signal according to the present embodiment. Fig. 7 and Fig. 8 are diagrams for describing an arrangement of a radio resource used for transmitting a D2D synchronization signal according to the present embodiment.

As shown in Fig. 6, a case is assumed where a UE 100-1 that is a D2D synchronization source transmits a D2D synchronization signal.

The UE 100-1 that is a D2D synchronization source uses a radio resource for D2D communication (reception resource pool) as shown in Fig. 7. Specifically, the radio resource for D2D communication is divided, in a time direction, into an SA region and a data region. The widths in time and frequency directions of a radio resource for D2D communication and a cycle of a radio resource for D2D communication are persistent. The width in the time direction of a radio resource for D2D communication is preferably a multiple of 20 msec in order to be exclusively used for VoIP. Further, to reduce a delay when VoIP is generated, the width in the time direction of a radio resource for D2D communication is preferably 40 msec.

The SA region is divided, in the frequency direction, into a plurality of SA resource pools (SA pools 0 to 3). For example, the width in the frequency direction of an SA resource pool is 10 RBs or 12 RBs, and the width in the time direction of an SA resource pool is four subframes.

The data region is divided, in the frequency direction, into a plurality of data resource pools (Data pools 0 to 3). For example, the width in the frequency direction of a data resource pool is 10 RBs or 12 RBs, and the width in the time direction of a data resource pool is 36 subframes.

Each of the plurality of SA resource pools and each of the plurality of data resource pools correspond in the time direction. For example, the SA resource pool 0 and the data resource pool 0 are made to correspond to each other by a resource pool ID "0".

In the radio resource for D2D communication, a radio resource pool (D2D synchronization pool) for transmitting a D2D synchronization signal is arranged in the SA resource region.

Specifically, the D2D synchronization pool is arranged in the time direction from a head symbol of the SA resource region to a predetermined symbol (for example, 0 to 13 symbols), and is arranged, in the frequency direction, over several RBs (for example, 6 RBs) in the center in the frequency direction of the radio resource for D2D communication. The cycle of the D2D synchronization pool may be persistent at 40 msec.

It is noted that in the radio resource for D2D communication in the second mode, a portion corresponding to the PUCCH in the first mode is bank.

As shown in Fig. 8, to the D2D synchronization pool, a D2D synchronization resource for transmitting a D2D synchronization signal is assigned. In the UE 100-1 that is a D2D synchronization source, a setting for transmitting a D2D synchronization signal (D2DSS config.) is performed. In the present embodiment, as the setting for transmitting a D2D synchronization signal, there are three types of setting which are different in location (specifically, have no overlapping) of the D2D synchronization resource in the time direction. The UE 100-1 that is a D2D synchronization source selects any one of the settings. To restrain interference between the D2D synchronization signals, the UE 100-1 may randomly select any one of the settings, and may select a setting that is not set by another D2D-synchronization-source UE on the basis of the D2D synchronization signal received from the other D2D-synchronization-source UE. Depending on each setting, the time location of the D2D synchronization resource used differs.

As described above, a D2D synchronization signal includes a D2DSS and a PD2DSCH. The D2DSS is a signal for providing a synchronization standard of a time and a frequency. In addition, the D2DSS is used for demodulating the PD2DSCH. The D2DSS is arranged to sandwich the PD2DSCH in the time direction. The width in the time direction of the D2DSS is one symbol, for example.

The PD2DSCH carries D2D resource information. Specifically, the PD2DSCH includes information indicating a frequency bandwidth (for example, a resource pool ID) of a radio resource for D2D communication. The information is desirably indicated by a small number of bits (for example, three bits). Further, the PD2DSCH includes information indicating a transmission resource pool used in the second mode.

The PD2DSCH may include information indicating whether or not information included in a D2D synchronization signal is information derived from the eNB 200. The information can be indicated by one bit. The information derived from the eNB 200 is information indicating a resource pool in the first mode and/or a resource pool in the second mode, for example. Further, the PD2DSCH may include information indicating the number of hops when information included in a D2D synchronization signal is transferred from another UE 100. It is noted that information included in a D2D synchronization signal is preferably not transferred.

The PD2DSCH may include information for instructing a CP length. The information can be indicated by one bit.

A signal sequence of the PD2DSCH differs depending on each type of setting for transmitting a D2D synchronization signal. Thus, in accordance with the signal sequence of the PD2DSCH, it is possible to specify which resource is used for the D2D synchronization signal to be transmitted.

It is noted that the width in the time direction of the PD2DSCH is two symbols, for example. Alternatively, the width in the time direction of the PD2DSCH may be three symbols or four symbols.

It is noted that a reception resource pool used outside a coverage is previously regulated.

### (Operation according to embodiment)

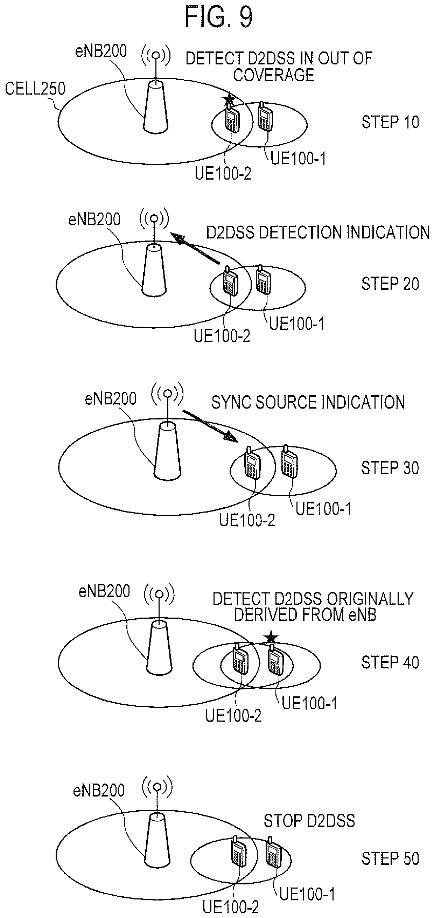

Next, an operation according to the embodiment will be described by using Fig. 9. Fig. 9 is an explanatory diagram for describing an operation according to the embodiment.

As shown in Fig. 9, the UE 100-1 is located outside a cell 250 managed by the eNB 200 and is in an RRC idle state at the cell 250. On the other hand, a UE 100-2 is located inside the cell 250, and is in an RRC connected state at the cell 250. Alternatively, the UE 100-2 may be in an RRC idle state.

Description proceeds with an assumption that the UE 100-2 monitors at least a D2D synchronization resource pool. The UE 100-2 may spontaneously monitor a D2D synchronization resource pool in order to utilize a D2D proximity service or may monitor the same on the basis of an instruction from the eNB 200.

In such an operating environment, the following operation is performed.

In step S10, the UE 100-1 transmits a D2D synchronization signal. The UE 100-2 monitors D2DSS from UE in out of coverage, in this way, the UE 100-2 receives (detects) the D2D synchronization signal.

In step S20, the UE 100-2 transmits, to the eNB 200, detection information (D2DSS detection indication) indicating that the D2D synchronization signal is detected. The UE 100-2 may transmit the detection information to the eNB 200 when a reception level (for example, a reception strength) of the received D2D synchronization signal is equal to or more than a predetermined value. The predetermined value is, for example, a value equal to or more than a received power value necessary for performing D2D communication.

Further, the UE 100-2 may transmit detection information to the eNB 200 when receiving a D2D synchronization signal from the UE 100 not located inside the cell 250. Therefore, the UE 100-2 may not transmit detection information to the eNB 200 when receiving a D2D synchronization signal from the UE 100 located inside the cell 250. For example, the UE 100-2 transmits detection information to the eNB 200 when flag information indicating that the UE 100 from which a D2D synchronization signal is transmitted is located outside the cell is included in the D2D synchronization signal.

The detection information may include not only an identifier (for example, a C-RNTI) of the UE from which the detection information is transmitted, but also location information of the UE from which the detection information is transmitted, an identifier of the transmission source from which a D2D synchronization signal included in the received detection information is transmitted, received power of the D2D synchronization signal, etc.

The eNB 200 determines on the basis of the detection information received from the UE 100-2 whether or not to transmit setting information for setting the transmission source of the detection information to a D2D synchronization source. For example, the eNB 200 may determine to not transmit the setting information when at least any one of the followings applies.

Firstly, the eNB 200 determines, for example, on the basis of location information of the UE from which detection information is transmitted, to not transmit setting information, when, near the UE from which the detection information is transmitted, there is a UE that transmits another D2D synchronization signal.

Secondly, the eNB 200 determines to not transmit setting information, when the UE from which a D2D synchronization signal is transmitted is located inside the cell 250.

Thirdly, the eNB 200 determines to not transmit setting information, when the received power of a D2D synchronization signal included in the detection information is equal or more than a predetermined value.

In step S30, the eNB 200 transmits, to the UE 100-2, a message (e.g., RRC message) including setting information (Sync Source indication) for setting the UE 100-2 to a D2D synchronization source.

The UE 100-2 performs setting for transmitting a D2D synchronization signal, on the basis of the setting information received from the eNB 200.

It is noted that the setting information may include information indicating a transmission resource pool in the second mode. Further, the setting information may include information for instructing a CP length.

In step S40, the UE 100-2 starts transmitting a D2D synchronization signal. The UE 100-1 receives the D2D synchronization signal from the UE 100-2. The D2D synchronization signal may include information indicating a transmission resource pool used in the second mode. The D2D synchronization signal may include information indicating whether the D2D synchronization signal is derived from the eNB 200.

In step S50, in response to receipt of the D2D synchronization signal from the UE 100-2, the UE 100-1 stops transmitting a D2D synchronization signal. The UE 100-2 may stop transmitting a D2D synchronization in response to detecting a D2DSS derived from the eNB 200. Then, the UE 100-1 follows the D2DSS timing of UE100-2. The UE 100-2 will be in partially coverage condition.

Further, on the basis of the information included in the D2D synchronization signal from the UE 100-2, the UE 100-1 can know a transmission resource pool (SA resource pool and data resource pool) used in the second mode. The UE 100-1 can perform D2D communication by using the transmission resource pool during a synchronized period, on the basis of the D2D synchronization signal from the UE 100-2.

### (Conclusion of embodiment)

In the present embodiment, the UE 100-2 transmits, to the eNB 200, detection information when receiving a D2D synchronization signal from the UE 100-1. The eNB 200 transmits, to the UE 100-2, setting information for setting the UE 100-2 to a D2D synchronization source, on the basis of the detection information received from the UE 100-2. As a result, the eNB 200 can comprehend by the detection information that there is another UE (specifically, the UE 100-1) near the UE 100-2, and thus, the eNB 200 can set an appropriate UE as a D2D synchronization source.

In the present embodiment, the UE 100-2 starts transmitting a D2D synchronization signal, on the basis of the setting information received from the eNB 200. The UE 100-1 stops transmitting a D2D synchronization signal when receiving the D2D synchronization signal from the UE 100-2. As a result, it is possible to reduce a possibility that a D2D synchronization signal which is out of synchronization timing is received.

In the present embodiment, the UE 100-2 can transmit a D2D synchronization signal including the information indicating a transmission resource pool used in the second mode. As a result, the UE 100-1 can know a transmission resource pool used in the second mode even when the UE 100-1 does not know a transmission resource pool used in the second mode. As a consequence, the UE 100-1 can select an appropriate radio resource in D2D communication.

In the present embodiment, the UE 100-2 can transmit, to the eNB 200, detection information when the reception level of a D2D synchronization signal from the UE 100-1 is equal to or more than a predetermined value. Thus, the UE 100-2 can avoid transmission of a D2D synchronization signal when it is expected that reception quality of the D2D synchronization signal is low. Therefore, it is possible to avoid transmission of a wasteful D2D synchronization signal.

### [Other Embodiments]

In the above-described embodiment, a D2D synchronization signal includes information indicating a transmission resource pool in the second mode; however, this is not limiting. A D2D synchronization signal may include information indicating a transmission resource pool used in the first discovery type.

In the embodiment described above, although an LTE system is described as an example of a mobile communication system, it is not limited to the LTE system, and the present application may be applied to a system other than the LTE system.

It is noted that the entire content of US Provisional Application No. 61/991051 (filed on May 9, 2014) is incorporated in the present specification by reference.

### [Additional statement]

### (A) First chapter

### (1) Introduction

In the first chapter, details for synchronization resource allocation are further considered.

### (2) Synchronization resource period

In this section, the synchronization resource allocation is presented. Placing D2DSS within the SA region instead of the data region allows more efficient data transmission since all resources can be used only for data. It is proposed that SA resource pool period should be 40 ms. Therefore, D2DSS period should be fixed, 40ms. In addition, to reduce the impact on the SA region, D2DSS only use center 6RBs of first subframes of the SA region. Fig.7 shows the resource allocation of D2DSS relative to SA and Data resources.

Proposal 1: D2DSS period should be placed in SA resource pool timing because of less impact of data.

Placing D2DSS within the SA region instead of the data region allows more efficient data transmission since all resources can be used only for data.

### (3) Resource allocation in synchronization reserved region.

In this section, the resource allocation in synchronization reserved region is presented. It is proposed that the PD2DSCH is placed between 2 D2DSSes. D2DSS and PD2DSCH's collisions are significantly damaged on the system. 3 patterns for the non-collision position of D2DSS and PD2DSCH are proposed as shown in Fig.8. This pattern is called D2DSS config. The sequence of D2DSS is based on PSS and linked to D2DSS config. The sequence shows the D2DSS config. In order to avoid D2DSS/PD2DSCH collisions, it is proposed that a D2D UE selects one of the 3 patterns shown in Fig. 8 and transmit the same pattern for every D2DSS/PD2DSCH transmission.

Proposal 2: D2DSS and PD2DSCH's allocation should have several patterns for collision reduction.

Synchronization source can select 1 of 3 patterns randomly for collision reduction. For further study, it can be considered that synchronization source UE detect D2DSS config and avoid the detected D2DSS config.

Proposal 3 Synchronization source can select 1 of 3 patterns randomly for collision reduction.

### (B) Second chapter

### (1) Introduction

In the second chapter, details for synchronization signal and channel design are further considered.

### (2) Physical design of D2DSS and PD2DSCH

In this section, the physical design of D2DSS and PD2DSCH is discussed. It is proposed that D2DSS should be used to demodulate the PD2DSCH if supported and transmitted in the same subframe. The D2DSS will eliminate the need for DMRS in the PD2DSCH resulting in an efficient design. Fig.8 shows the physical design structure of the proposal. It is proposed to allocate PD2DSCH between two D2DSS transmissions. In order to avoid D2DSS/PD2DSCH collisions, it is proposed that a D2D UE selects one of the 3 patterns shown in Fig. 8 and transmit the same pattern for every D2DSS/PD2DSCH transmission.

Proposal 1: If PD2DSCH is supported, the D2DSS should be used to demodulate PD2DSCH.

Proposal 2: The design structure shown in Fig. 8 where the PD2DSCH is allocated between the 2 D2DSSs should be considered.

### (3) PD2DSCH design

From the impact on the system's performance perspective, the PD2DSCH's bit size should be small. The following PD2DSCH design is proposed. In order to reduce the number of bits used it should consider pre-defined reception pool and the indication of reception pool is not necessary.

Proposal 3: PD2DSCH should have small number of bits as shown in Table 1.

**Table 1**

| Item | Num. of bits |
|---|---|
| Bandwidth | 3 |
| Transmission pool for D2D communication Mode 2 | 3 |
| Whether this D2DSS is originally derived from eNB | 1 |
| CP length | 1 |
| Hop count(if needed) | a few bits[FFS] |

### (C) Third chapter

### (1) Introduction

In the third chapter, details for synchronization procedure are further considered.

### (2) Synchronization sequence design

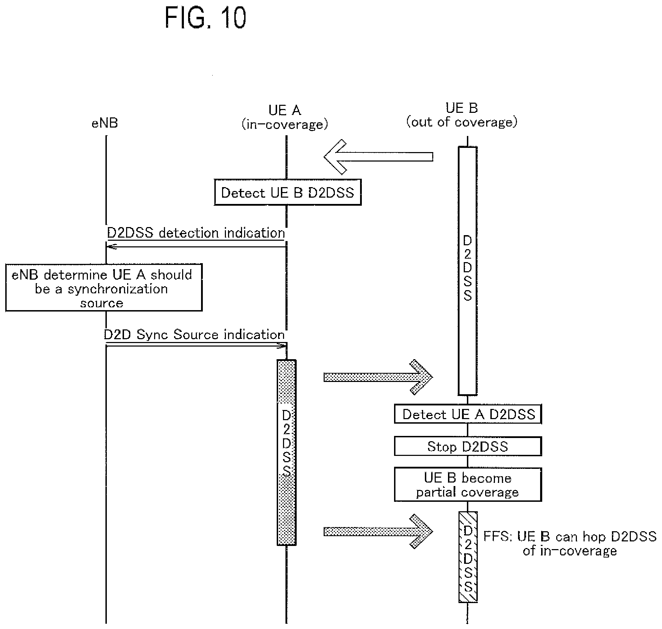

In the third chapter, the focus is on the part of the agreement related to in-coverage. As stated in agreement a UE can become a D2D Synchronization Source at least if it is configured to do so by the eNB. This implies this there is a need of forwarding of the sync signal to out of coverage D2D UEs. However, an eNB is not aware which UE should be the D2D Synchronization Source for the out-of-coverage D2D UEs. A mechanism to resolve this issue is proposed. Below Fig.9 shows the procedure steps and Fig. 10 shows the signaling for the proposed procedure. The main concept is the in-coverage D2D UE first detects a D2DSS from an out-of-coverage D2D UE (Fig. 9, Step S10) and then reports to the serving eNB by sending a D2DSS detection indication (Fig. 9, Step S20).

Proposal: It should consider that in-coverage D2D UE reports to the eNB the detection of a D2DSS from an out-of-coverage D2D UE by sending a D2DSS detection indication.

After receiving the D2DSS detection indication the eNB configures the same UE as the Synchronization Source that has reported the D2DSS detection (Fig. 9, Step S30).

In Fig. 9 Step S40 and S50 show how an out-of-coverage D2D UE handles the reception of the D2DSS from the in-coverage D2D UE. Fig. 10 provides some signaling details.

### INDUSTRIAL APPLICABILITY

As described above, the embodiment-based communication control method, user terminal, and base station enable an appropriate user terminal to be set as a D2D synchronization source, and thus are useful in the field of mobile communication.

## Claims

1. A communication control method, comprising:
a step of transmitting, by a user terminal located inside a cell, detection information indicating that a D2D synchronization signal is detected, to a base station that manages the cell, when receiving the D2D synchronization signal from another user terminal; and
a step of transmitting, to the user terminal, by the base station, on the basis of the detection information received from the user terminal, setting information for setting the user terminal to a D2D synchronization source.

2. The communication control method according to claim 1, further comprising:
a step of starting, by the user terminal, transmitting a D2D synchronization signal, on the basis of the setting information received from the base station; and
a step of stopping, by the other user terminal, transmitting the D2D synchronization signal, when receiving the D2D synchronization signal from the user terminal.

3. The communication control method according to claim 1, further comprising:
a step of transmitting, by the user terminal, a D2D synchronization signal including information indicating a D2D resource used in a D2D proximity service.

4. The communication control method according to claim 1, wherein
in the step of transmitting the detection information, the user terminal transmits, to the base station, the detection information when a reception level of the D2D synchronization signal from the other user terminal is equal to or more than a predetermined value.

5. A user terminal, comprising:
a transmitter configured to transmit detection information indicating that a D2D synchronization signal is detected, to a base station that manages a cell, when receiving the D2D synchronization signal from another user terminal.

6. A base station, comprising:
a receiver configured to receive, from a user terminal, detection information indicating that a D2D synchronization signal is detected; and
a transmitter configured to transmit, to the user terminal, on the basis of the detection information received from the user terminal, setting information for setting the user terminal to a D2D synchronization source.
